# EUROPEAN PATENT SPECIFICATION

(11) **EP 1 790 951 B1**
(45) Date of publication and mention of the grant of the patent: **26.11.2014**
(21) Application number: 06024622.0
(22) Date of filing: 28.11.2006
(51) Int. Cl.: G01D 5/244

(54) **Signal processing circuit for encoder**
Signalverarbeitungsschaltung für einen Kodierer
Circuit de traitement du signal pour un capteur

(30) Priority: 29.11.2005 JP 2005343478
(43) Date of publication of application: 30.05.2007
(73) Proprietor: FANUC CORPORATION, Oshino-mura Minamitsuru-gun Yamanashi 401-0597 (JP)
(72) Inventor: Taniguchi, Mitsuyuki, Gotenba-shi Shizuoka 412-0045 (JP); Kikuchi, Hirofumi, Minamitsuru-gun Yamanashi 401-0511 (JP); Matsuo, Tadayoshi, Minamitsuru-gun Yamanashi 401-0511 (JP)
(74) Representative: Schmidt, Steffen

(56) References cited:
- EP-A1- 0 787 973
- WO-A-2004/048899
- US-A- 4 990 767

## Description

### BACKGROUND OF THE INVENTION

### 1. Field of the Invention

The present invention relates to a signal processing circuit for an encoder of a type having two detectors arranged on both sides of a rotating shaft in order to eliminate an eccentricity error.

### 2. Description of the Related Art

One of the detection errors that can occur in an encoder is an eccentricity error, i.e., the error caused by the eccentricity of its rotating part. This eccentricity error can be canceled by arranging two detectors on both sides of the rotating shaft and by taking an average between the angular values θ₁ and θ₂ calculated from their respective output signals, as described, for example, in the prior art section of JP 3195117B.

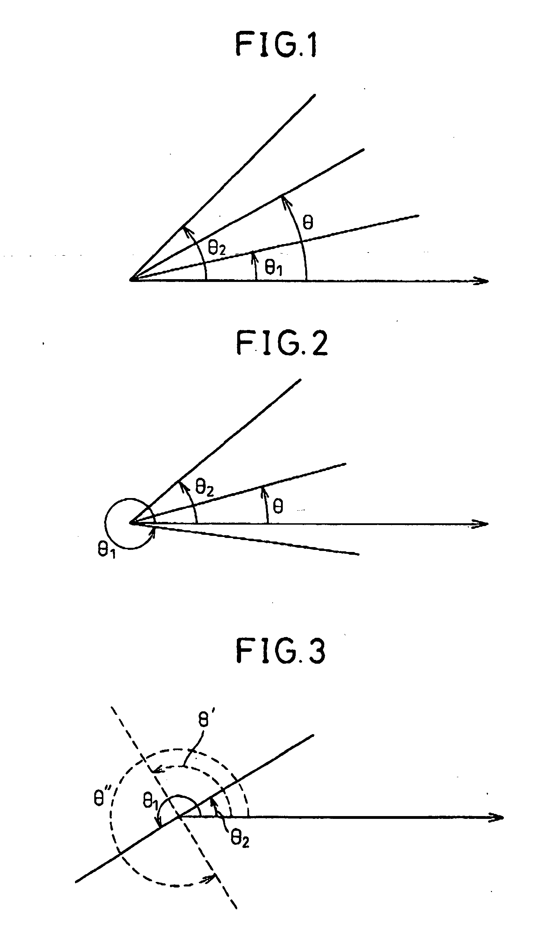

As the average θ = (θ₁ + θ₂) /2 is the average of angular values, it is not the mere average of the values, but the value of θ is chosen so that, after the averaging, the angle θ is located between θ₁ and θ₂, as shown in Figures 1 and 2.

However, in a certain type of encoder, such as a magnetic encoder, in which the detectors are mounted to the stator or rotor after the encoder is assembled, the difference between θ₁ and θ₂ calculated from the output signals of the respective detectors may become equal to 180°, depending on the mounting condition of the detectors; in that case, two solutions θ' and θ" can occur, resulting in a 180° displacement, as shown in Figure 3.

Therefore, to avoid the above situation, in the prior art the detectors have had to be mounted by exercising care so that the difference between θ₁ and θ₂ will not become equal to 180° while considering the positional relationship between the detectors, and hence the problem that it takes time to mount the detectors appears.

US 4,990,767 discloses a measuring device in which a graduated plate is scanned in at least two scanning locations. The scanning signals from the different scanning locations are transmitted to a testing circuit which determines whether the phase displacement between the scanning signals exceeds a limit value. If the limit value is exceeded, one of the scanning locations is weighted higher than the other. The weighting is implemented by increasing the components of the signals from one scanning location while decreasing the components from the signals from the other scanning location.

EP 0 787 973 discloses an apparatus for processing angular data obtained from an encoder, comprising an arithmetic circuit for processing angular data by using encoder signals of different phases as triangular wave signals, a storage for storing corrective data for correcting an angular error between the encoder signal and the triangular wave signal by using the data from the arithmetic circuit as the address, a circuit for adding the data from the arithmetic circuit to the corrective data from the storage, and a converter for effecting angle conversion depending on the quadrant of the encoder signal.

WO2004/048899 discloses a rotation-angle detecting device containing two rotators having the same number of teeth, which engage with a gear fixed to a rotation-detecting axle as a detected object. The detecting device further includes a controller. Receiving a rotation-angle signal from the rotators, the controller amplifies the signal, performs calculations, and stores the results. The controller converts each rotation-angle signal from each rotator into each periodic waveform output having the same crest value, and stores an initial phase difference value at initial setting. In driving operations, monitoring an evaluation value calculated with reference to the initial phase difference value, the controller determines that abnormalities occurred, if the evaluation value exceeds a predetermined abnormality-evaluation threshold.

### SUMMARY OF THE INVENTION

It is accordingly an object of the present invention to provide a signal processing circuit in which mounting of the detectors in an encoder having two detectors are arranged on both sides of the rotating shaft in order to eliminate an eccentricity error can be facilitated.

According to the present invention, there is provided an encoder signal processing circuit according to claim 1.

When one or the other of the first and second angular values is corrected by the initial value of their difference, if the angular value before the correction contains an error associated with the positional relationship between the detectors, the two angular values after the correction become close to each other: as a result, if the detectors are mounted in any positional relationship, the situation where the difference between the two values after the correction becomes equal to 180 degrees, causing two solutions to occur, can be prevented, and thus the mounting of the detectors can be facilitated.

### BRIEF DESCRIPTION OF THE DRAWINGS

Figure 1 is a diagram for explaining the averaging of angular values;
Figure 2 is a diagram for explaining the averaging of angular values;
Figure 3 is a diagram for explaining the problem of averaging that can occur when the angular difference is 180°;
Figure 4 is a block diagram showing a first embodiment of the present invention; and
Figure 5 is a block diagram showing a first embodiment of the present invention.

### DESCRIPTION OF THE PREFERRED EMBODIMENTS

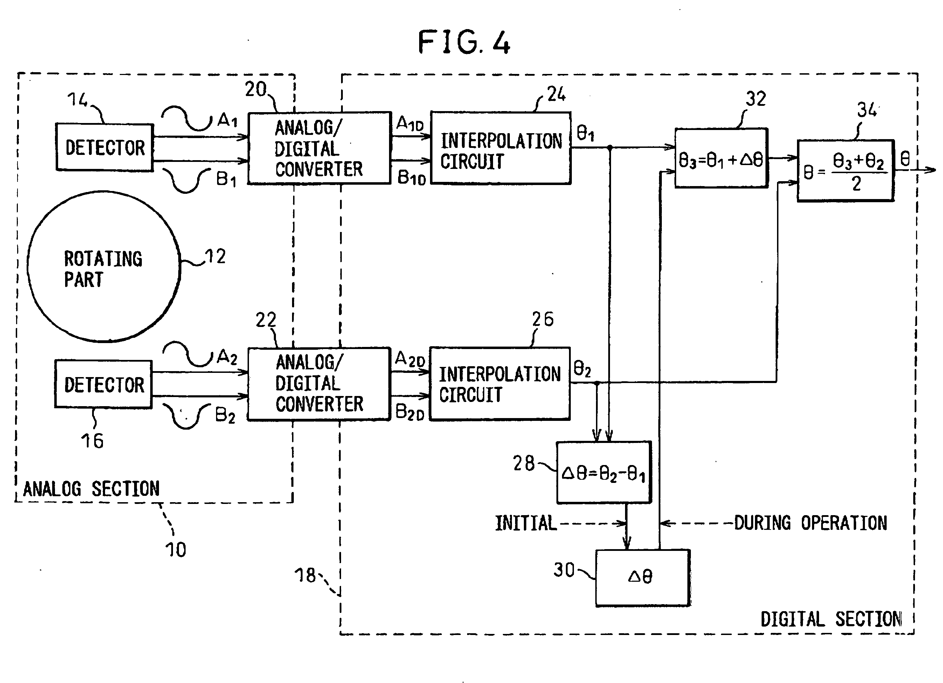

Figure 4 is a block diagram showing the configuration of an encoder signal processing circuit according to a first embodiment of the present invention.

In an analog section 10, as a rotating part 12 rotates, two sine wave signals A₁ and B₁, 90° apart in phase, are output from a detector 14 mounted near the rotating part 12. Similarly, sine wave signals A₂ and B₂ are output from a detector 16 mounted opposite the detector 14 across the rotating part 12. Analog/digital converters 20 and 22, each interfacing the analog section 10 with a digital section 18, convert the analog values A₁, B₁, A₂, and B₂ into digital values A_{1D}, B_{1D}, A_{2D}, and B_{2D}, respectively. An interpolation circuit 24 calculates an angular value θ₁ from the digital values A_{1D} and B_{1D} by a known method, and outputs the result. Similarly, an interpolation circuit 26 calculates an angular value θ₂ from the digital values A_{2D} and B_{2D}, and outputs the result.

A Δθ calculator 28 calculates Δθ = θ₂ - θ₁ (or θ₁ - θ₂), and stores the value of △θ in a memory 30 after mounting the detectors 14 and 16 and before initiating the operation of the encoder or in the initialization process after power on. Here, the value of △θ may be measured a plurality of times, and its average value may be stored as △θ. A corrector 32 applies a correction by adding the value of △θ stored in the memory 30 to the value of θ₁ (or θ₂), i.e., by the calculation of θ3 = θ₁ + △θ.

A position data calculator 34 calculates the average between the corrected value θ₃ and the value of θ₂, i.e., θ = (θ₃ + θ₂)/2, and outputs the result as the position data θ.

In this way, by applying a correction by adding the initial difference △θ to the angular value θ₁, the initial phase difference associated with the positional relationship between the detectors 14 and 16 can be canceled, and the situation where the difference between the corrected value of θ₁ (i.e., θ₃) and θ₂ becomes equal to 180° can thus be avoided. That is, when mounting the detectors 14 and 16, there is no need to exercise care so that the difference between the angular values calculated from the respective output signals will not become equal to 180°.

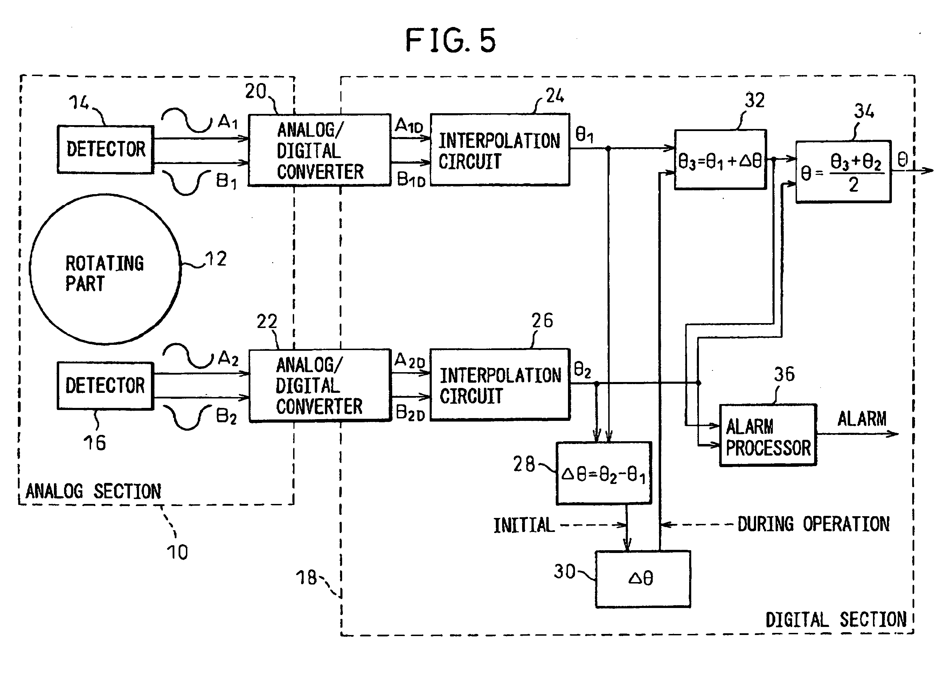

Figure 5 shows a second embodiment according to the present invention. In this embodiment, an alarm processor 36 is added to the configuration of Figure 4. The alarm processor 36 outputs an alarm when 180° - θ_{ALM} < θ₃ - θ₂ < 180° + θ_{ALM}, that is, when the angular difference (θ₃ - θ₂) after the correction lies within the range of 180° to θ_{ALM}, where θ_{ALM} is a predetermined value.

In this way, an alarm can be issued whenever there arises the possibility of an abnormal value being output as the phase difference after the correction becomes close to 180° due, for example, to the breakage or a displacement in the mounting position of the detectors.

## Claims

1. An encoder signal processing circuit for calculating position data by processing signals output from first and second detectors (14, 16) arranged on both sides of a rotating shaft (12), **characterized by** comprising:
a first analog/digital converter (20) configured to convert first and second sine wave signals (A_{1,} B₁) output by the first detector (14) into first and second digital values (A_{1D}, B_{1D}) respectively, the first and second sine wave signals being 90 degrees apart in phase;
a second analog/digital converter (22) configured to convert third and fourth sine wave signals (A₂, B₂) output by the second detector (16) into third and fourth digital values (A_{2D}, B_{2D}) respectively, the third and fourth sine wave signals being 90 degrees apart in phase;
a first interpolation circuit (24) configured to calculate a first angular value (θ₁) from the first and second digital values (A_{1D}, B_{1D});
a second interpolation circuit (26) configured to calculate a second angular value (θ₂) from the third and fourth digital values (A_{2D}, B_{2D});
initial difference storing means (30) for storing an initial value of an angular difference (Δθ) calculated between the first and second angular values (θ₁, θ₂);
correcting means (32) for correcting the first angular value (θ₁) by the initial value (Δθ) of the angular different stored in the initial difference storing means (30) to obtain a third angular value (θ₃); and
position data calculating means (34) for calculating the position data by taking an average between the second and third angular values (θ₂, θ₃).

2. An encoder signal processing circuit according to claim 1, further comprising alarm outputting means (36) for outputting an alarm when the difference between the second and third angular values (θ₂, θ₃)lies within a prescribed range.

## Patentansprüche

1. Signalverarbeitungsschaltung eines Kodierers zum Berechnen von Positionsdaten durch Verarbeiten von Signalen, die von ersten und zweiten Detektoren (14, 16) ausgegeben werden, die auf beiden Seite einer rotierenden Welle (12) angeordnet sind, **dadurch gekennzeichnet, dass** die Signalverarbeitungsschaltung umfasst:
einen ersten Analog-/Digitalwandler (20), der dazu eingerichtet ist, erste und zweite Sinuswellensignale (A₁, B₁), die von dem ersten Detektor (14) ausgegeben werden, in entsprechende erste und zweite digitale Werte (A_{1D}, B_{1D}) umzuwandeln, wobei die ersten und zweiten Sinuswellensignale um 90 Grad phasenverschoben sind;
einen zweiten Analog-/Digitalwandler (22), der dazu eingerichtet ist, dritte und vierte Sinuswellensignale (A₂, B₂), die von dem zweiten Detektor (16) ausgegeben werden, in entsprechende dritte und vierte digitale Werte (A_{2D}, B_{2D}) umzuwandeln, wobei die dritten und vierten Sinuswellensignale um 90 Grad phasenverschoben sind;
eine erste Interpolationsschaltung (24), die dazu eingerichtet ist, einen ersten Winkelwert (θ₁) aus den ersten und zweiten digitalen Werten (A_{1D}, B_{1D}) zu berechnen;
eine zweite Interpolationsschaltung (26), die dazu eingerichtet ist, einen zweiten Winkelwert (θ₂) aus den dritten und vierten digitalen Werten (A_{2D}, B_{2D}) zu berechnen;
Anfangsdifferenzspeichermittel (30) zum Speichern eines Anfangswerts einer Winkeldifferenz (Δθ), die zwischen den ersten und zweiten Winkelwerten (θ₁, θ₂) berechnet wurde;
Korrekturmittel (32) zum Korrigieren des ersten Winkelwerts (θ₁) mittels des Anfangswerts (Δθ) der Winkeldifferenz, der in den Anfangsdifferenzspeichermitteln (30) gespeichert wurde, um einen dritten Winkelwert (θ₃) zu erhalten; und
Positionsdatenberechnungsmittel (34) zum Berechnen der Positionsdaten durch das Entnehmen eines Durchschnitts zwischen den zweiten und dritten Winkelwerten (θ₂, θ₃).

2. Signalverarbeitungsschaltung eines Kodierers nach Anspruch 1, die ferner Warnausgabemittel (36) umfasst, zum Ausgeben einer Warnung, wenn die Differenzzwischen den zweiten und dritten Winkelwerten (θ₂, θ₃) innerhalb eines vorgegebenen Bereichs liegt.

## Revendications

1. Circuit de traitement de signal de codeur destiné à calculer des données de position en traitant des signaux délivrés en sortie depuis des premier et deuxième détecteurs (14, 16) agencés sur les deux côtés d'un arbre rotatif (12), **caractérisé en ce qu'**il comprend :
un premier convertisseur analogique/numérique (20) configuré pour convertir des premier et deuxième signaux sinusoïdaux (A₁, B₁) délivrés en sortie par le premier détecteur (14) en première et deuxième valeurs numériques (A_{1D}, B_{1D}) respectivement, les premier et deuxième signaux sinusoïdaux étant espacés de 90 degrés en phase ;
un deuxième convertisseur analogique/numérique (22) configuré pour convertir des troisième et quatrième signaux sinusoïdaux (A₂, B₂) délivrés en sortie par le deuxième détecteur (16) en troisième et quatrième valeurs numériques (A_{2D}, B_{2D}) respectivement, les troisième et quatrième signaux sinusoïdaux étant espacés de 90 degrés en phase ;
un premier circuit d'interpolation (24) configuré pour calculer une première valeur angulaire (θ₁) à partir des première et deuxième valeurs numériques (A_{1D}, B_{1D}) ;
un deuxième circuit d'interpolation (26) configuré pour calculer une deuxième valeur angulaire (θ₂) à partir des troisième et quatrième valeurs numériques (A_{2D}, B_{2D}) ;
un moyen (30) de mémorisation de différence initiale destiné à mémoriser une valeur initiale d'une différence angulaire (Δθ) calculée entre les première et deuxième valeurs angulaires (θ₁, θ₂) ;
un moyen de correction (32) destiné à corriger la première valeur angulaire (θ₁) par la valeur initiale (Δθ) de la différence angulaire mémorisée dans le moyen (30) de mémorisation de différence initiale pour obtenir une troisième valeur angulaire (θ₃) ; et
un moyen (34) de calcul de données de position destiné à calculer les données de position en prenant une moyenne entre les deuxième et troisième valeurs angulaires (θ₁, θ₂).

2. Circuit de traitement de signal de codeur selon la revendication 1, comprenant en outre un moyen (36) de sortie d'alarme destiné à délivrer en sortie une alarme lorsque la différence entre les deuxième et troisième valeurs angulaires (θ₁, θ₂) repose à l'intérieur d'une plage prescrite.
